# EUROPEAN PATENT APPLICATION

(11) **EP 2 818 740 A1**
(43) Date of publication of application: **31.12.2014**
(21) Application number: 13305923.8
(22) Date of filing: 28.06.2013
(51) Int. Cl.: F16C 32/04, H02K 3/487, H02K 5/128

(54) **Canned electromagnetic machine stator for use in a corrosive atmosphere**

(71) Applicant: SKF Magnetic Mechatronics S.A.S., 27950 Saint Marcel (FR)
(72) Inventor: Baudelocque, Luc, 27200 VERNON (FR); Soulier, Nicolas, 27600 FONTAINE BELLENGER (FR); Sice, Frederik, 27950 SAINT MARCEL (FR)
(74) Representative: Thévenet, Jean-Bruno

(57) **Abstract**

A canned electromagnetic machine stator for a rotary machine operating in a corrosive atmosphere under a high pressure, comprises at least one coil (132, 133), a core (131) made of magnetic material, the core (131) including pole pieces and at least one slot for accommodating the at least one coil (132, 133) and a leak-tight can (134) for hermetically sealing the stator. The stator further comprises a spacer (140, 150) located between the can (134) and the core (131) to cover the at least one slot, the spacer (140, 150) limiting deflection of the can (134) around edges of the at least one slot and being designed to withstand the high pressure.

## Description

### BACKGROUND OF THE INVENTION

### 1. Field of the Invention

The present invention relates to a canned electromagnetic machine stator for use in a corrosive atmosphere, and more particularly to an active magnetic bearing used in a pressurized rotary machine operating in a corrosive atmosphere.

### 2. Description of the Related Art

An electromagnetic machine such as an active magnetic bearing, an inductive sensor or an electric motor includes a stator having a magnetic circuit comprising laminated or solid magnetic material and coils wound in slots made in the magnetic circuit.

In different applications where a rotary machine is used with a medium that is acid, corrosive, or carrying particles, a can which is also named a jacket or a sleeve is used to isolate a stator with its windings and ferromagnetic parts and avoids direct contact with the aggressive medium.

However such cans imply complicated manufacturing processes when an electric machine should be used in so-called "oil and gas" environments, in particular for applications coming under the standard ANSI/NACE MR0175/ISO 15156 "Petroleum and natural gas industries - Materials for use in H₂S-containing environments in oil and gas production".

Up to now, the can of a magnetic bearing used in a corrosive environment is usually made of magnetic stainless steel of 17-4 PH type. The yield stress limit of such material is about 1100 MPa. This allows to manufacture a canned bearing with rather good corrosion resistance. However such magnetic bearing is not NACE compliant unless complicated manufacturing is made with weld heat treatment.

It has also been proposed, e.g. in US EP2522869, to use ferritic material for building a can. This solution has two main advantages: it permits to build a NACE bearing without the need to have weld heat treatment and it has a better behavior in terms of pitting corrosion. However the drawback of the ferritic material is its yield stress limit which is in the range of 400 MPa.

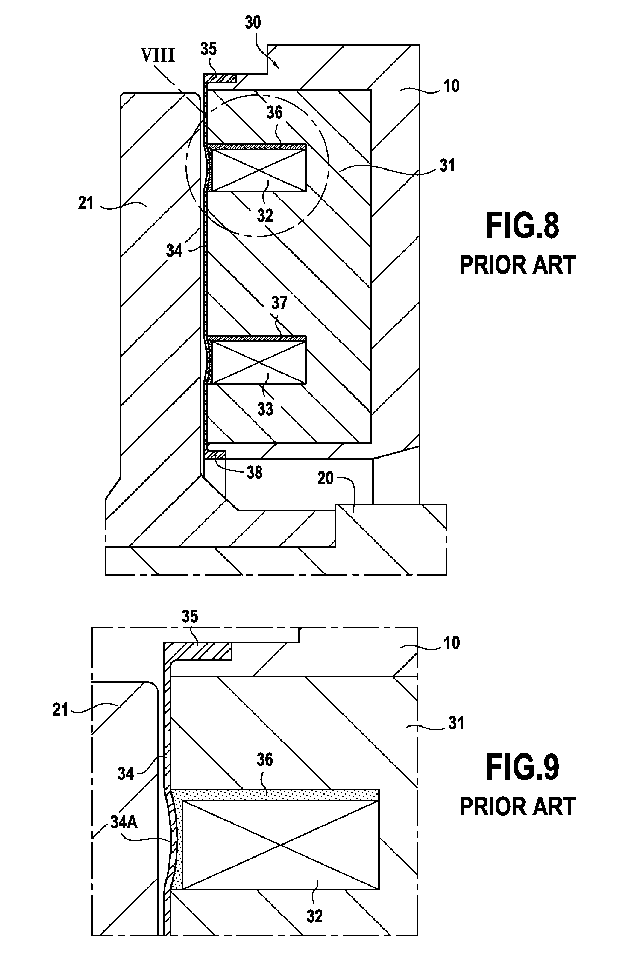

Figure 8 shows an example of a portion of a known NACE-compliant canned axial magnetic bearing using a can made of magnetic material, such magnetic material being for example a ferritic material or a magnetic stainless steel of 17-4 PH type.

Figure 8 shows a rotary shaft 20 having a thrust disc 21 which is integral therewith and is arranged perpendicularly to the axis of the shaft 20. An air gap is defined between the thrust disc 21 which constitutes the rotor of the axial magnetic bearing and a stator portion 30 of the axial magnetic bearing. The stator portion 30 comprises a magnetic circuit or core 31 constituted by a solid magnetic core, by laminated ferromagnetic sheets or by a mix of solid magnetic core and ferromagnetic sheets, the core 31 being integral with a housing 10 of the machine. Coils 32, 33 are wound in circular grooves or slots having the same axis as the axis of the shaft 20. The empty spaces around the coils 32, 33 in the corresponding slots are filled with a resin or molding 36, 37 respectively. A can 34 made of a magnetic material is fixed to the housing 10 at portions 35, 38 which are located on each side of the stator portion 30.

The slots of the stator portion 30 are thus filled with a resin 36, 37 having an expansion coefficient which is generally higher than the expansion coefficient of the metal part constituting the core 31. Therefore in hot condition, the resin 36, 37 is expanding outside the slots of the core 31, leaving sharp edges of the resin in contact with the can 34 (situation not illustrated in the drawings), whereas in cold condition the resin is contracting inside the slots of the core 31 leaving the sharp edges of the slots of the core 31 in contact with the can 34, as illustrated in figure 9, which is an enlarged portion of figure 8. If an external pressure is applied, the can 34 is pushed inside the slots of the coils, thus creating very high stresses at the corners of the slots. Figure 9 thus shows a portion 34A of the can 34 which is bulged inside a slot of the coil 32 when the resin 36 is retracted in cold condition and high pressures are applied. For example the bulged portion 34A of figure 9 may be created for a 90 kN canned axial bearing that has a manufacturing temperature of 20°C, but which is placed in an environment with a temperature of -10°C and a pressure of 250 bar. It happens that the stresses are too high at the corners of the slots housing the coils 32, 33 compared with the yield stress limit of the can material.

### SUMMARY OF THE INVENTION

When using a thin can, which may be made in a metallic or non-metallic material, on a stator portion of an electromagnetic machine such as an axial or a radial magnetic bearing, an associated sensor and/or an electric motor in high pressure environment and with a wide thermal range, such a thin can is highly stressed at the location of the slots or grooves due to the sharp edges of such slots formed in a solid or laminated magnetic core.

The technical problem to be solved is therefore to remedy the above-mentioned drawbacks and in particular to avoid contact of the can with these sharp edges of the slots receiving windings in a magnetic core in order to limit the stresses.

The invention further aims at allowing the possibility of using, for a can of a stator portion of an electromagnetic machine, a material with low yield stress limit but with good corrosion resistance and good magnetic properties.

More generally the invention aims at allowing the possibility of using an improved canned electromagnetic machine stator in a pressurized rotary machine operating in a corrosive atmosphere.

Another aim of the present invention is to have a simplified method of manufacture of such a canned electromagnetic machine stator.

The invention is defined in the appended claims.

The invention more specifically relates to a canned electromagnetic machine stator for a rotary machine operating in a corrosive atmosphere under a high pressure higher than the atmospheric pressure, comprising at least one coil, a core made of solid or laminated magnetic material, said core including pole pieces and at least one slot for accommodating said at least one coil, and a leak-tight can for hermetically sealing said stator, **characterized in that** it further comprises a spacer located between said can and said core to cover said at least one slot, said spacer limiting deflection of the can around edges of said at least one slot and being designed to withstand said high pressure.

According to a first embodiment, the spacer is made of a non-magnetic and non-conductive material.

According to a second embodiment, the spacer is made of a non-magnetic and conductive material radially cut by at least one slit and insulated from the core.

The at least one slot may further comprise a molding of a resin compound in voids around the coil.

Preferably, an air gap is formed between said molding and said spacer to prevent a molding thermal expansion to push the spacer beyond an outer surface of the core facing the can.

The air gap thus avoids any thermal deformation pushing the can from the inside and avoids creating sharp edges at the edges of the spacer in contact with the can.

According to a specific embodiment, the spacer is a ring spacer having at least one radial slit.

The can may be made of ferritic material or of super ferritic material or of magnetic stainless steel material.

Alternatively the can may be made of non-magnetic (stainless or not) steel material.

Alternatively, the can may be made of a chemical- and heat-resistant insulating material such as PEEK.

According to a specific embodiment, the spacer comprises stepped edges.

According to another specific embodiment, the spacer comprises beveled edges.

The invention applies in particular to an active axial magnetic bearing including the canned electromagnetic machine stator as here-above defined.

The invention further applies to an active radial magnetic bearing including the canned electromagnetic machine stator as here-above defined.

The invention further applies to an inductive sensor for a magnetic bearing, said sensor comprising the canned electromagnetic machine stator as here-above-defined.

The invention further applies to an electric motor comprising the canned electromagnetic machine stator as here-above defined.

### BRIEF DESCRIPTION OF THE DRAWINGS

Fig. 1 is an axial half-section view of a canned axial magnetic bearing according to an embodiment of the invention,
Fig. 1A is an enlarged view of a portion of the canned axial magnetic bearing of Fig. 1,
Figs. 2 is another enlarged view of a portion of the canned axial magnetic bearing of Fig. 1,
Fig. 3 is an axial section view on line III-III of Fig. 4, showing another example of a canned axial magnetic bearing according to the invention,
Fig. 4 is a radial section view on line IV-IV of Fig. 3,
Fig. 5 is an axial view of a portion of a canned radial magnetic bearing according to an embodiment of the invention, with two different types of additional spacers,
Fig. 6 is a longitudinal view of a portion of a canned radial magnetic bearing according to the embodiment of Fig. 5,
Fig. 7A is a view of a portion of a canned axial magnetic bearing according to a variant embodiment of the invention, under atmospheric pressure and at ambient temperature,
Fig. 7B is a view of the portion of the canned axial magnetic bearing of Fig. 7A, when pressurized and in hot condition,
Fig. 7C is a view of the portion of the canned axial magnetic bearing of Fig. 7A, when pressurized and in cold condition,
Fig. 8 is an axial half-section view of a canned axial magnetic bearing according to the prior art when placed in cold condition and pressurized, and
Fig. 9 is an enlarged view of a portion of the canned axial magnetic bearing of Fig. 8.

### DESCRIPTION OF THE PREFERRED EMBODIMENTS

The present invention will be described in connection with preferred embodiments which are given by way of examples.

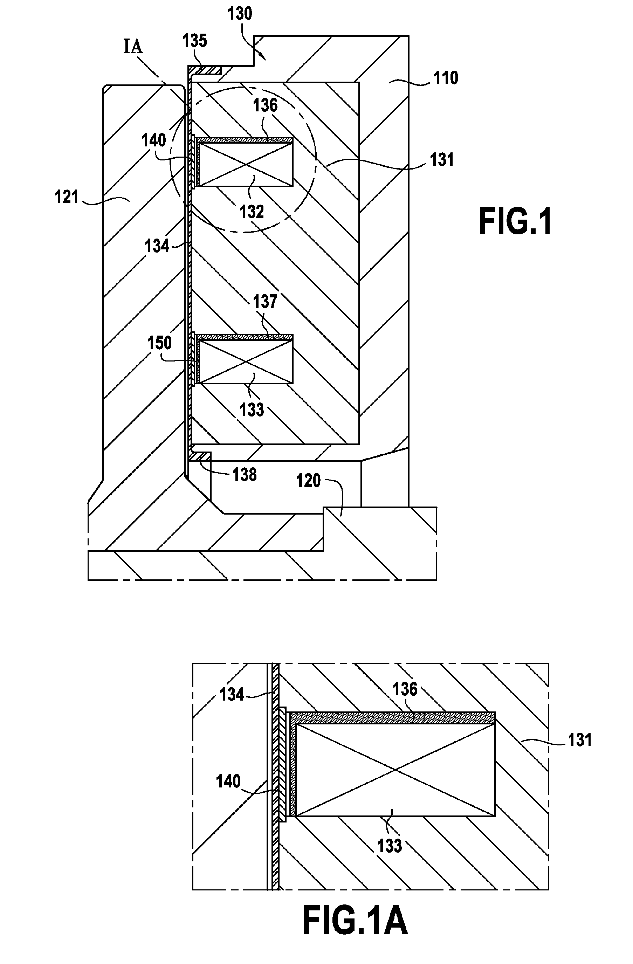

Fig. 1 shows a typical arrangement of a canned axial magnetic bearing including a stator 130 according to the invention.

Fig. 1 shows a rotary shaft 120 having a thrust disc 121 which is integral therewith and is arranged perpendicularly to the axis of the shaft 120. An air gap is defined between the thrust disc 121 which constitutes the rotor of the axial magnetic bearing and a stator portion 130 of the axial magnetic bearing. The stator portion 130 comprises a magnetic circuit or core 131 constituted by solid magnetic core or laminated ferromagnetic sheets integral with a housing 110 of the stator. Coils 132, 133 are wound in circular grooves or slots having the same axis as the axis of the shaft 120. The empty spaces around the coils 132, 133 in the corresponding slots may be filled with a resin or molding 136, 137 respectively, although due to the present invention this is not absolutely necessary. A leak-tight can 134, which may advantageously be made of a ferritic or super ferritic material, is fixed to the housing 110 at portions 135, 138 which are located on each side of the stator portion 130.

According to a key feature of the invention, spacers or wedges 140, 150 respectively are located between the can 134 and the core 131 to cover the slots accommodating the coils 132, 133 respectively. Each spacer 140, 150 contacts the edges of the corresponding slot, but a small void can be tolerated without significantly increasing the stresses inside the can 134. The spacers 140, 150 are designed to withstand a high pressure which is higher than the atmospheric pressure and may be several bar or several tens bar, e.g. 250 bar. The void between the spacer and the core can allow to insulate the spacer 140, 150 from the core 131 or be filled with insulating material.

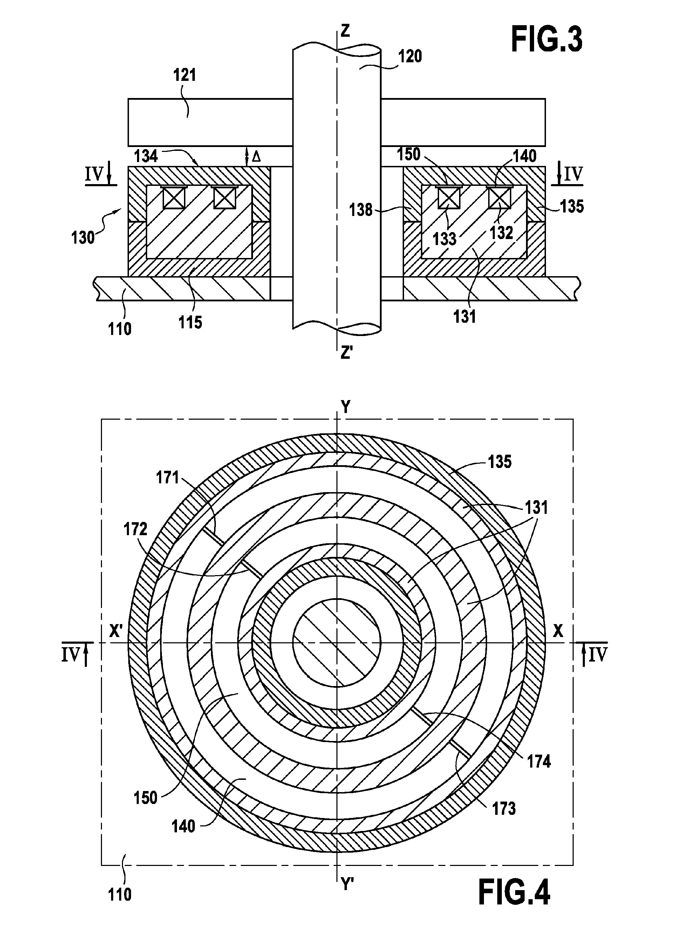

Figs. 3 and 4 show an axial magnetic bearing which is similar to the embodiment of Figs. 1 and 1A, with a stator portion 130 defining an air gap Δ with respect to a thrust disc 121 defining a rotor portion. Fig. 3 shows the axis Z-Z' of the shaft 120 and Fig. 4 shows the axes X-X' and Y-Y' which are mutually perpendicular and are perpendicular to the axis Z-Z'. The elements of Figs. 3 and 4 which are similar to the elements of Fig. 1 have the same reference numerals and will not be described again. The can 134 has curved end portions 135, 138 which constitute outer and inner flanges and are welded to the free ends of the outer and inner flanges of an annular support 115 which is integral with a housing 110. The specific embodiment of Figs. 3 and 4 illustrates only an example of manufacturing a can 134 and the invention applies to many other embodiments.

Figs. 3 and 4 show spacers 140, 150 located between the can 134 and the slots accommodating the coils 132, 133. As can be seen in Fig. 4, each spacer 140, 150 respectively may be constituted by a ring having one or more radial slits 171, 173; 172, 174 respectively, each part being insulated from the other and from the core However this is only an optional feature.

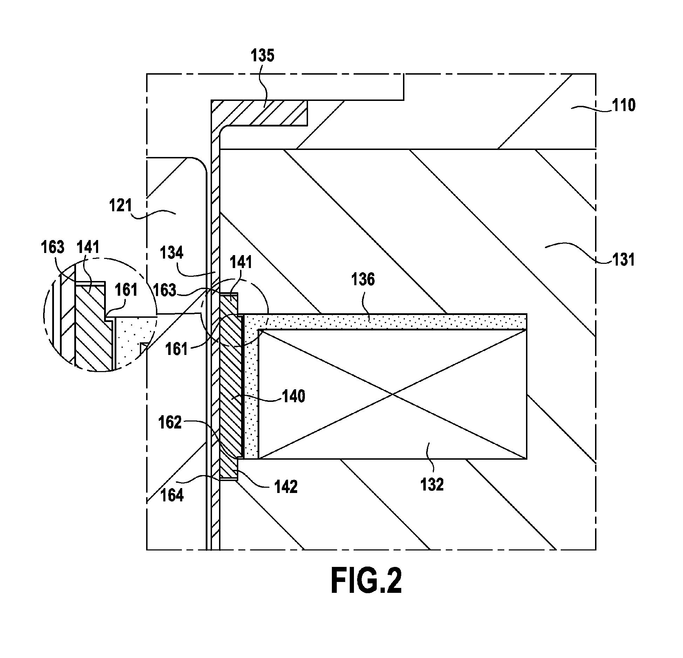

Fig. 2 illustrates with greater details an example of spacer 140 such as the spacer of Fig. 1 interposed between the can 134 and the slot accommodating the coil 132 and a molded resin 136. The spacer 140 comprises stepped portions 141, 142 which bear against corresponding recesses in the core 131 at the opening of the slot accommodating the coil 132, near the outer edges 163, 164 of the slot. The spacer 140 thus avoids or at least substantially limits the bulge 134A of the prior art illustrated in Fig. 9 and warranties that the inner edges 161, 162 of the recesses and the outer sharp edges 163, 164 of the slot will not come into contact with the can 134 with high stresses, whatever the external pressure and the retraction of the resin 136 are.

By placing a spacer 140 between the can 134 and the resin 136 located in the slot accommodating the coil 132, it is possible to significantly reduce the stresses in the portions of the can 134 facing the edges of the slot.

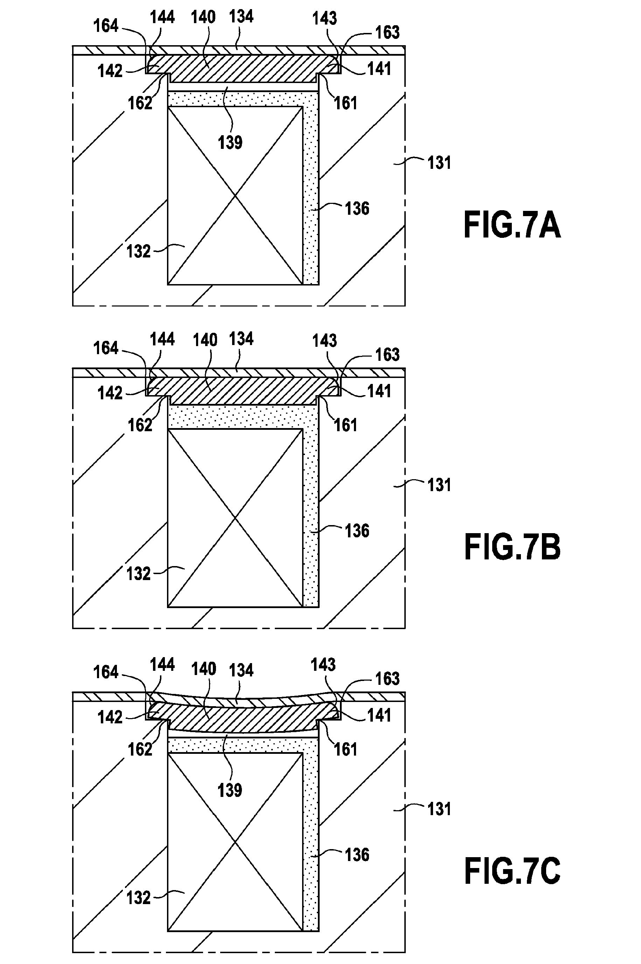

In the embodiment of Fig. 2, the spacer ring 140 is supported on steps made on each side of the corresponding slot. Thus, when the temperature decreases, the resin 136 contracts and a space less than one millimeter is created between the spacer 140 and the resin 136. When a high pressure is applied, the spacer 140 deforms (as shown in Fig. 7C) and may even touch the resin 136. The stresses inside the can 134 are however maintained at a sufficiently low level which is compatible with the yield stress limit of the material of the can 134.

As the stresses are limited, there is no more restriction to use e.g. ferritic or super ferritic material for the cans of canned magnetic bearings. It is thus possible to build canned magnetic bearings which are resistant to pitting corrosion and compatible with NACE requirement, without the need of weld heat treatment to release the welding stresses (such as the weld heat treatment disclosed in document US7847454B2).

The spacers 140, 150 may be made of metallic material with an electrical insulation, the metallic material being magnetic or non-magnetic according to the needs. Generally the use of a non-magnetic material is preferred.

Alternatively, the spacers 140, 150 may be made of ceramics or composite material.

The spacers 140, 150 may also be made of a chemical- and heat-resistant plastic material, such as polyimide or PEEK (polyetheretherketone).

The choice of material may depend of the type of electric machine using the canned stator.

The use of spacers according to the invention may allow for manufacturing a stator 130 of an axial bearing which does not comprise any molding of resin, such as the moldings bearing the references 136, 137 in Fig. 1. The stators are then cheaper to produce, whilst the spacers 140, 150 enable to reduce the risk of undue stresses on the can 134.

The description of the invention has been described with reference to an axial magnetic bearing in relation to Figs. 1, 1A and 2 to 4. However, the invention with spacers closing slots and bearing against the edges of the slots, applies in the same manner with respect to radial magnetic bearings or electric motors.

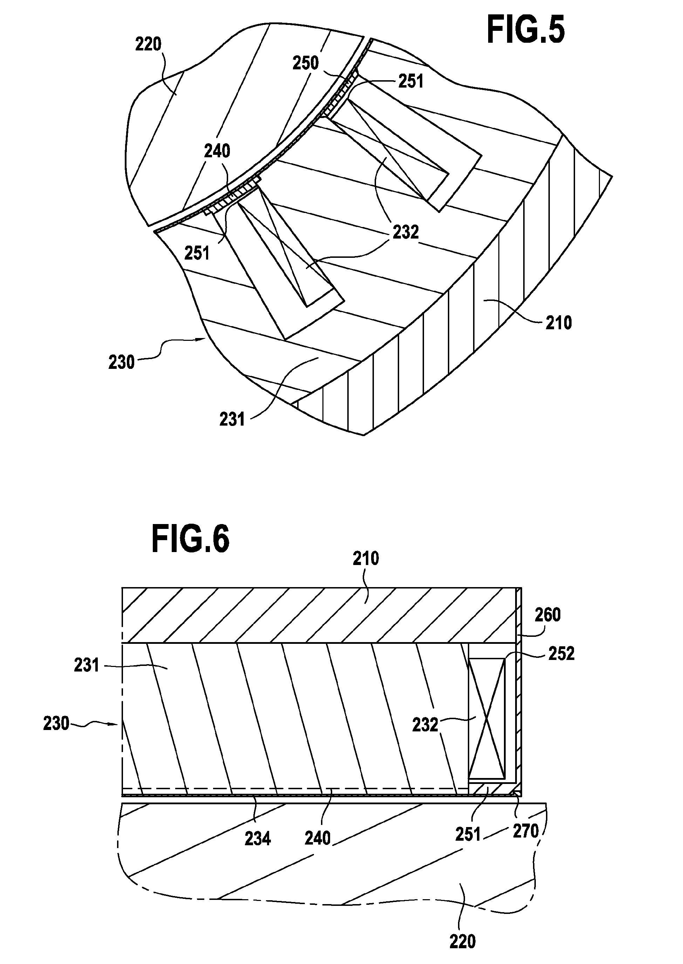

Figs. 5 and 6 illustrate, in axial view and longitudinal view respectively, a portion of a canned radial magnetic bearing according to an embodiment of the invention, with two different types of additional spacers 240, 250 which improve the mechanical behavior of the can 234.

In Figs. 5 and 6 a canned stator 230 of a radial magnetic bearing is located around a rotor 220, without contact between the rotor 220 and the stator 230.

The stator comprises a core 231 made of laminations of ferromagnetic material. The core 231 comprises poles which are defined between slots or notches which receive windings 232 constituting coils disposed around the poles of the core 231 which is integral with a substantially cylindrical stator housing 210 which may be welded to radial flanges 260 (Fig. 6). The stator 230 is hermetically sealed by a can 234 which faces the rotor 220.

According to the invention, the slots accommodating the windings 232 are closed by spacers 240, 250 located between the can 234 and the edges of the slots. In Fig. 5, spacer 240 is shown as having stepped edges, like spacer 140 of Fig. 2, whereas spacer 250 is shown as having beveled edges. Of course, the same stator may have spacers of a single type (spacer 240 or spacer 250) or spacers of different types.

Spacers 250 with beveled edges may also be used with stators of axial magnetic bearings instead of the spacers 140 of Fig. 2. Other types of spacers are also possible, as soon as the lateral ends of the spacers are inserted between the can 134 or 234 and the edges of the slot receiving a winding.

As shown in Figs. 5 and 6, a radial air gap 251 may be defined between a coil 232 and a spacer 240 or 250. Similarly as shown in Fig. 6, an axial air gap 252 may be defined between a coil 232 and a flange 260 of the radial bearing but voids are generally substantially filled with resin. In Fig. 6, the reference numeral 270 designates a welding between the can 234 and the flange 260 of the radial bearing.

If a resin is molded in the slots around the windings 232, the radial air gap 251 and the axial air gap 252 between the molding and the spacers 240, 250 let free the molding's thermal displacement. However it may be noted that axial air gap 252 is optional for a radial bearing and may not be necessary, as there is no sharp edge in contact with a thin can in this location. If the molding has a thermal expansion from the same quantity as the air gap, the molding will just push back the spacer in its original geometrical form, whatever the external pressure.

The internal molding (see references 136 and 137 of Fig. 1) is optional and may be omitted for a cheaper production if the pressure is not too high (e.g. lower than a few bar). The internal molding is preferably used if the pressure is higher than e.g. 100 bar and up to a few hundreds bar. Molding may also be required when fast depressurization rates have to be handled.

Figs. 7A, 7B and 7C illustrate a specific embodiment of the invention implying a molding which fills only partially the free space available in a slot around a coil. The embodiment of Figs. 7A, 7B and 7C relates to a stator of an axial magnetic bearing but could be applied similarly to a stator of a radial magnetic bearing.

Fig. 7A corresponds to a stator being at atmospheric pressure and at ambient temperature. This embodiment is similar to the embodiment of Fig. 2. Like elements bear the same reference numerals and will not be described again. The peculiarity of the embodiment of Fig. 7A is that a void or free space 139 is reserved between the molding 136 located around the coil 132 and the wedge or spacer 140.

Fig. 7B corresponds to the stator of Fig. 7A, but the stator is under operating condition which corresponds to a high pressure and hot condition. Since the temperature has increased above the level of ambient temperature, the molding expands and substantially eliminates the void 139 of Fig. 7A. However the expanded molding bears against the spacer 140 which constitutes a protection for the can 134 which is not deformed.

Fig. 7C corresponds to the stator of Fig. 7A, but the stator is under operating condition which corresponds to a high pressure and cold condition. Since the temperature has decreased below the level of ambient temperature, the molding contracts and recreates at least partially the void 139 of Fig. 7A. Moreover the high pressure acts against the can 134 and the spacer 140 which are slightly deformed or bulged. However the spacer 140 limits deflection of the can 134 around the edges 163, 164 of the slot accommodating the coil 132 and the molding 136. The spacer 140 is slightly thicker than the can 134 and is able to withstand the high pressure. Due to the original void 139, the molding thermal expansion and contraction do not push the spacer 140 beyond the surface of the core 131 facing the can 134. Even if the spacer 140 is slightly deformed under pressure, the stresses at the level of the sharp edges 163, 164 of the slot formed in the core 131 are not damageable.

As can be seen in Figs. 7A, 7B and 7C, it may be advantageous that the edges 143, 144 of the stepped portions 141, 142 of the spacer 140 facing the can 134 in the vicinity of the sharp edges 163, 164 of the slot of the core 131 be slightly rounded to limit the stresses in the can 134 when the spacer 140 is slightly deformed.

The spacers described in connection with axial and radial magnetic bearings may be similarly applied to canned stators of inductive axial and radial sensors which have at a reduced scale a structure which is similar to the structure of axial and radial magnetic bearings respectively. For example an inductive radial sensor is disclosed in document FR2897911B1 or in document EP2522869 in connection with a canned active magnetic bearing.

The spacers described in connection with radial magnetic bearings may also be similarly applied to canned stators of electric motors which have a structure which is substantially similar to the structure of radial magnetic bearings with canned stators cooperating with rotors.

Although preferred embodiments have been shown and described, it should be understood that any changes and modifications may be made therein without departing from the scope of the invention as defined in the appended claims. Thus the features of the different embodiments may be combined. Furthermore, a stator of an axial magnetic bearing has been described with two concentric coils 132, 133, but the invention may be applied to an axial magnetic bearing having a single coil 132 or 133. In the present description a single canned stator 130 has been described in cooperation with a side face of a thrust disc 121 of a canned axial magnetic bearing. However another similar canned stator may be used in cooperation with the other side face of the thrust disc 121. Furthermore the invention may also be applied to a combined axial and radial magnetic bearing.

The invention is suitable for use in combination with machines such as compressors, turbo-expanders, refrigeration compressors and more generally all kinds of pressurized rotary machines and more specifically addresses canned electromagnetic machines used in such environments and more specifically designed for operating in an atmosphere in compliance with the standard NACE MR0175/ISO 15156.

## Claims

1. A canned electromagnetic machine stator for a rotary machine operating in a corrosive atmosphere under a high pressure higher than the atmospheric pressure, comprising at least one coil (132, 133; 232), a core (131; 231) made of solid or laminated magnetic material, said core (131; 231) including pole pieces and at least one slot for accommodating said at least one coil (132, 133; 232) and a leak-tight can (134; 234) for hermetically sealing said stator, **characterized in that** it further comprises a spacer (140, 150; 240, 250) located between said can (134; 234) and said core (131; 231) to cover said at least one slot, said spacer (140, 150; 240, 250) limiting deflection of the can (134; 234) around edges (163, 164) of said at least one slot and being designed to withstand said high pressure.

2. The canned electromagnetic machine stator according to claim 1, wherein said spacer (140, 150; 240, 250) is made of a non-magnetic and non-conductive material.

3. The canned electromagnetic machine stator according to claim 1, wherein said spacer (140, 150; 240, 250) is made of a non-magnetic and conductive material radially cut by at least one slit and insulated from the core (131; 231).

4. The canned electromagnetic machine stator according to any one of claims 1 to 3, wherein said at least one slot further comprises a molding of a resin (136, 137) compound in voids around the coil (132, 133).

5. The canned electromagnetic machine stator according to claim 4, wherein an air gap (139) is formed between said molding (136, 137) and said spacer (140, 150) to prevent a molding thermal expansion to push the spacer beyond an outer surface of the core (131) facing the can (134).

6. The canned electromagnetic machine stator according to any one of claims 1 to 5, wherein said can is made of magnetic stainless steel material.

7. The canned electromagnetic machine stator according to any one of claims 1 to 5, wherein said can (134; 234) is made of ferritic or super ferritic material.

8. The canned electromagnetic machine stator according to any one of claims 1 to 5, wherein said can (134; 234) is made of non-magnetic steel material.

9. The canned electromagnetic machine stator according to any one of claims 1 to 5, wherein said can (134; 234) is made of chemical- and heat-resistant insulating material, such as PEEK.

10. The canned electromagnetic machine stator according to any one of claims 1 to 9, wherein the spacer (140; 240) comprises stepped edges (141, 142).

11. The canned electromagnetic machine stator according to any one of claims 1 to 9, wherein the spacer (250) comprises beveled edges.

12. An active axial magnetic bearing including the canned electromagnetic machine stator according to any one of claims 1 to 11.

13. An active radial magnetic bearing including the canned electromagnetic machine stator according to any one of claims 1 to 11.

14. An inductive sensor for a magnetic bearing, wherein said inductive sensor comprises the canned electromagnetic machine stator according to any one of claims 1 to 11.

15. An electric motor comprising the canned electromagnetic machine stator according to any one of claims 1 to 11.
